# EUROPEAN PATENT SPECIFICATION

(11) **EP 1 877 282 B1**
(45) Date of publication and mention of the grant of the patent: **23.11.2011**
(21) Application number: 06724729.6
(22) Date of filing: 05.05.2006
(51) Int. Cl.: B60R 16/00, B60R 11/00, B60Q 1/00

(54) **INTERFACE DEVICE FOR CONTROLLING ELECTRONIC APPARATUSES OF A VEHICLE**
SCHNITTSTELLENVORRICHTUNG ZUR STEUERUNG ELEKTRONISCHER VORRICHTUNGEN EINES FAHRZEUGS
DISPOSITIF D'INTERFACE POUR COMMANDER LES APPAREILS ELECTRONIQUES D'UN VEHICULE

(30) Priority: 06.05.2005 IT AT20050005
(43) Date of publication of application: 16.01.2008
(73) Proprietor: PASER S.R.L., I-14010 San Paolo Solbrito (IT)
(72) Inventor: PEDRAZZI, Franco, I-14010 San Paolo Solbrito (IT)
(74) Representative: Garavelli, Paolo
(86) International application number: PCT/EP2006/004218
(87) International publication number: WO 2006/119921

(56) References cited:
- DE-A1- 10 004 965
- US-A1- 2003 023 353

## Description

The present invention relates to an interface device for controlling electronic apparatuses of a vehicle.

In greater detail, the invention regards an interface device for controlling electronic apparatuses inside the passenger compartment of a motor vehicle.

Controls for car radios or cellphones are known set inside motor vehicles on the steering wheel. US 2003/023353 for example discloses such a control according to the preamble of claim 1.

Said controls, known as "steering-wheel controls", enable control, for example, of the car radio, to adjust the volume, select stations, and control the tone of the sound, without the driver having to take his hands off the steering wheel when he is driving. This considerably increases driving safety in so far as it reduces the chances of distraction on the part of the driver.

It is likewise known that modern motor vehicles are provided with an increasingly higher number of electronic apparatuses, which can be installed either during manufacturing of the motor vehicle itself or subsequently. Examples of this type of apparatuses are satellite navigators, GPS, DVD readers, transceivers, and Mp3 readers.

In order to manage the various functions, these apparatuses are each provided with appropriate controls that must be located and installed on the motor-vehicle dashboard. For example, in order to manage the handsfree kit, it is necessary for there to be a keypad to be fixed on the motor-vehicle dashboard, which in general has four pushbuttons.

This implies the need for the driver to take his hands off the steering wheel when driving in order to manage the handsfree functions, with all the risks that this entails. Among other things, said controls to be installed on motor vehicle-dashboards are frequently far from attractive, in particular for high-class saloons.

The present applicant has set itself the problem of enabling control of said electronic apparatuses which can be installed in motor vehicles, at the same time providing driving safety for the driver.

A purpose of the present invention is, consequently, to propose an interface for controlling any electronic apparatus that can be installed inside the passenger compartment of a motor vehicle, which will enable use of the steering-wheel controls.

Another purpose of the invention is to make available said interface in such a way that it can be programmed so as to be compatible with electronic apparatuses of different types.

Consequently, the specific subject of the present invention is an interface device for controlling the electronic apparatuses of a vehicle, said vehicle comprising a plurality of controls installed on the steering wheel, which are designed for generating an electrical signal following upon pressing thereof, said device being characterized in that it can be electrically connected to said controls and to said electronic apparatuses installed inside said vehicle, and in that it comprises a processing unit designed for converting the sequences of signals obtained from activation of said controls into corresponding control signals for controlling said electronic apparatuses.

Once again according to the invention, said processing unit can comprise a microprocessor, which is preferably programmable so as to be able to control a plurality of electronic apparatuses.

Again according to the invention, said processing unit may comprise an input signal interface designed for a pre-processing of the signal coming from said controls, and an output interface for the signals to be sent to said electronic apparatuses.

Advantageously, according to the invention, said control signals for controlling said electronic apparatuses can be obtained by means of one or more sequences of operation of said controls.

Once again according to the invention, said device can comprise an input connector, which can be electrically connected to said controls.

Again according to the invention, said device can comprise an output connector, which can be connected by means of wires to said electronic apparatuses installed inside said vehicle.

Once again according to the invention, said device can comprise wireless transceiver means for connection to said electronic apparatuses installed inside said vehicle.

Advantageously, according to the invention, said wireless transceiver means can be of the infrared or Bluetooth type.

Preferably, according to the invention, said device can comprise a supply-stabilization unit.

Once again according to the invention, said electronic apparatuses may comprise handsfree kits and/or satellite navigators and/or GPS and/or DVD readers and/or Mp3 transceivers and/or readers.

The present invention will now be described, by way of non-limiting illustration, in its preferred embodiments, with particular reference to the figures of the attached plate of drawings, in which:
- Figure 1 is a schematic view of the connections of the interface device for controlling electronic apparatuses of a vehicle according to the present invention;
- Figure 2 shows a block diagram of the interface device according to the present invention;
- Figures 3a to 3i show an example of control sequences for a handsfree kit; and
- Figures 4a to 4d show an example of control sequences for an Mp3 reader.

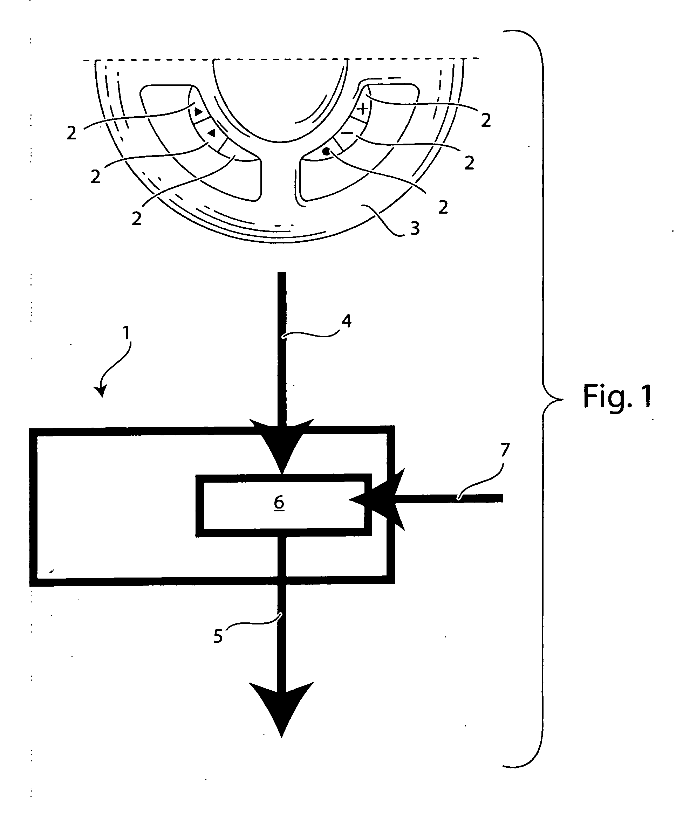

With reference to Figure 1, the connection of an interface device 1 according to the present invention may be noted.

Connected at input to said device 1 are the controls 2 of the steering wheel 3 of an automobile. Said connection occurs by means of specific connection wires 4.

The output wires 5 can be connected to various types of electronic apparatuses, such as handsfree kits, satellite navigators, GPS, DVD readers, transceivers, Mp3 readers, and the like.

Said wires can be replaced with a wireless-communication device, for example, of the infrared or the Bluetooth type.

Present inside said device 1 is a processing unit 6, which is able to recognize the keys of the original steering-wheel controls and to convert pressure of said keys, or a possible sequence thereof, into outputs such as to simulate the protocol for controlling any electronic apparatus such as, for example, the keypad of a handsfree kit.

It is to be noted that the device 1 comprises also a connection 7 for the power supply.

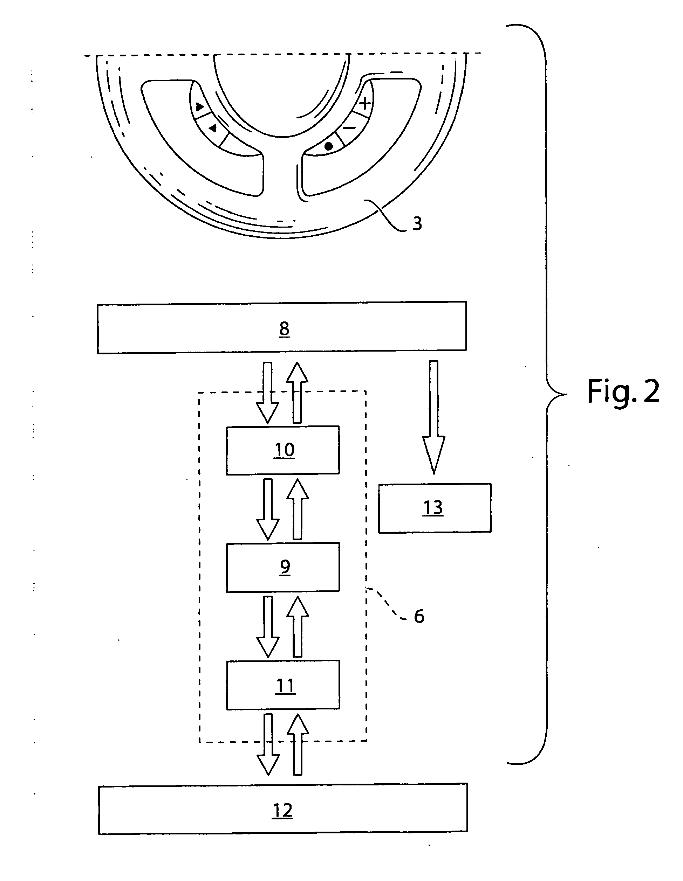

Figure 2 shows the block diagram of the interface device 1 according to the invention.

Said device 1 can be connected, by means of a connector 8, to the controls 2 of the steering wheel 3 of the motor vehicle. Said connector 8 enables, in the embodiment considered, also connection to the supply of the automobile.

Said controls 2 are for example:
key VOLUME +;
key VOLUME -;
key SEARCH +;
key SEARCH -;
key SOURCE.

The processing unit 6 includes a programmable microprocessor 9, and a pair of interfaces, namely, an input interface 10 and an output interface 11, of said microprocessor 9.

Said microprocessor 9 performs conversion of the communication type and protocols from the original steering-wheel commands into commands for the electronic apparatus to be controlled.

The interface 10 pre-processes the digital or analog input signal, for example, by pre-amplifying it. The interface 11, instead, is a buffer for the output signal.

In addition, said output device 1 has a connector for connection to the apparatus/apparatuses to be controlled.

Finally, a supply unit 13 may be noted in the figure, designed to stabilize supply for operation of the processing unit 6.

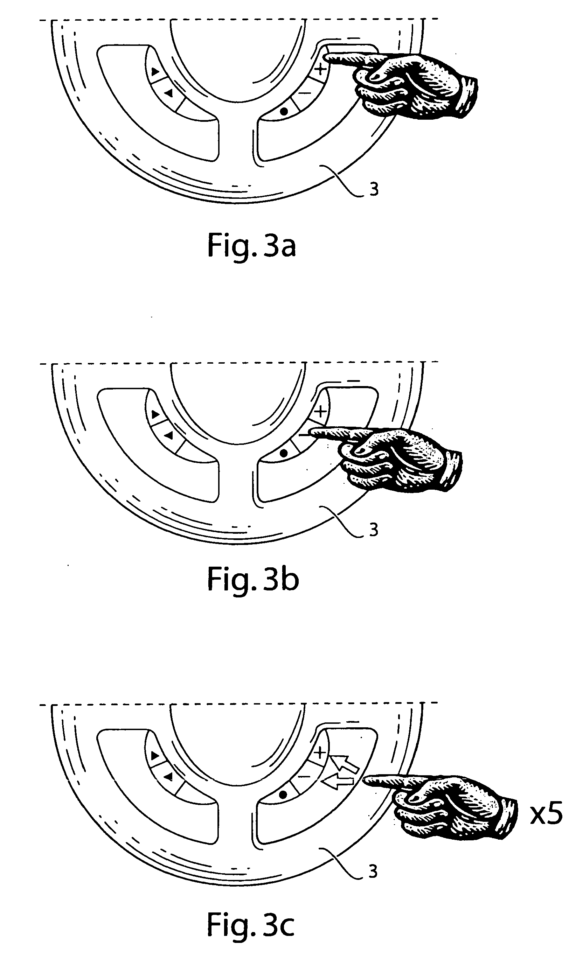

Figures 3a - 3i show an example of control sequences for a handsfree kit for which the use of a keypad having at least four pushbuttons is currently necessary.

Figure 3a: answering incoming calls = press key VOLUME +.

Figure 3b: hanging up after the conversation or rejecting a call = press key VOLUME -.

Figure 3c: resetting the handsfree settings = press keys VOLUME - and VOLUME + alternately five times.

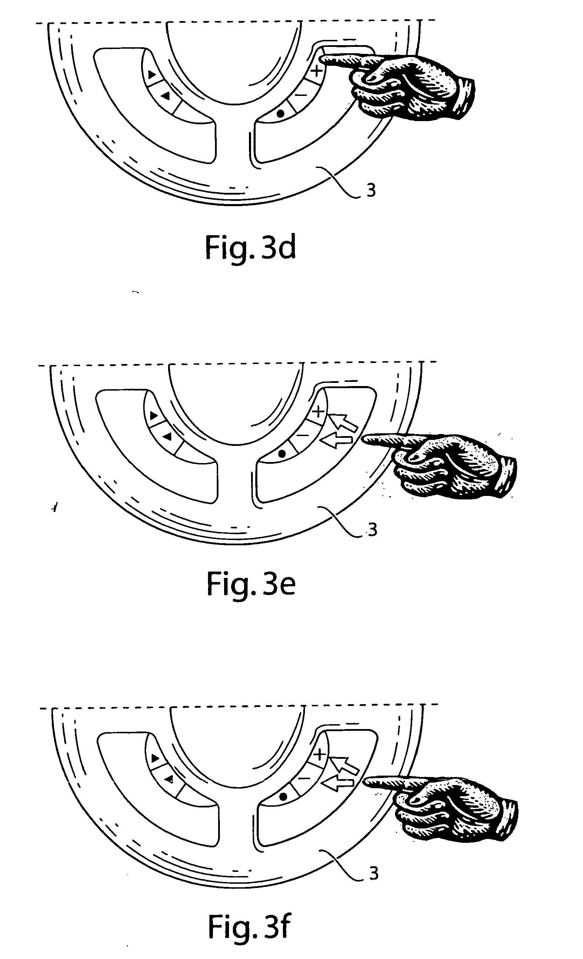

Figure 3d: passing to private conversation = press key VOLUME + during conversation (with mute input signal).

Figure 3e: raising audio volume = press alternately in sequence key VOLUME + followed by key VOLUME - and so forth, up to the desired volume (with mute input signal).

Figure 3f: reducing audio volume = press alternately in sequence key VOLUME - followed by key VOLUME + and so forth, up to the desired volume (with mute input signal).

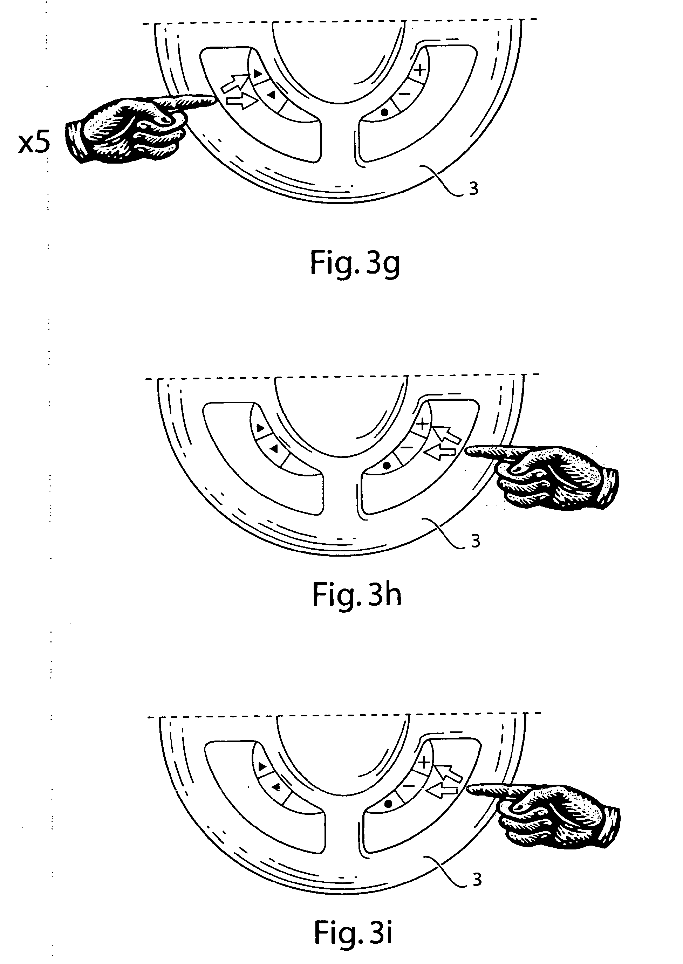

Figure 3g: selecting handsfree functions from menu = press in sequence within one second key SEARCH + followed by key SEARCH -, twice.

Figure 3h: scrolling handsfree functions = press key VOLUME + followed by key VOLUME - and so forth until the desired function is obtained, with sequences within one second from one another.

Figure 3i: scrolling handsfree functions backwards = press key VOLUME - followed by key VOLUME + and so forth until the desired function is obtained, with sequences within one second from one another.

Finally, it is possible to confirm a function by pressing the key VOLUME +.

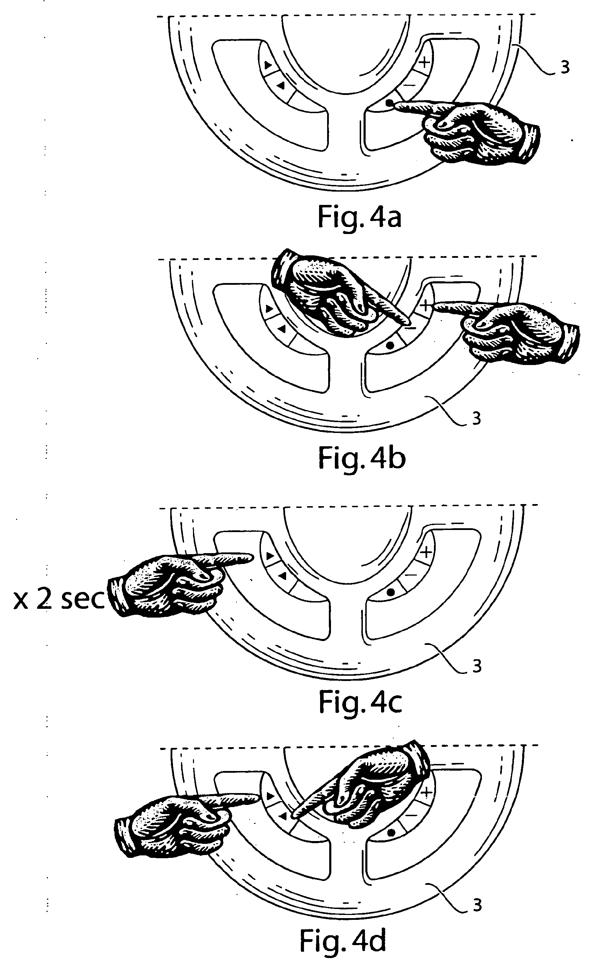

Instead, control of an Mp3 reader with original keys could be obtained, for example, according to Figures 4a - 4d.

Figure 4a: activating auxiliary port of car radio = press key SOURCE three times.

Figure 4b: controlling audio volume = press keys VOLUME + and VOLUME -.

Figure 4c: performing a search in playlist - press key SEARCH + and keep it depressed.

Figure 4d: search pieces = press keys SEARCH + and SEARCH -.

On the basis of the foregoing description, it may be noted that the fundamental characteristic of the present invention is the fact of presenting a processing unit capable of converting the control signals coming from the controls located on a steering wheel into corresponding signals for controlling electronic apparatuses.

One advantage of the present invention is to enable its installation in any automobile or vehicle in general.

A further advantage of the present invention is that said device is programmable so as to enable its use with different apparatuses, even simultaneously.

The present invention has been described by way of non-limiting illustration, with reference to its preferred embodiments, but it is to be understood that variations and/or modifications may be made by the persons skilled in the branch, without thereby departing from the corresponding sphere of protection, as defined by the annexed claims.

## Claims

1. A control-interface device (1) for controlling the electronic apparatuses of a vehicle, said vehicle comprising a plurality of controls (2) installed on the steering wheel (3), which are designed for generating an electrical signal following upon pressing thereof for controlling a plurality of electronic apparatuses installed during manufacturing of the vehicle in said vehicle, said control-interface device being **characterized in that**
it can be electrically connected to said controls (2) and both to said plurality of electronic apparatuses pre-installed and to one or more further added electronic apparatuses installed subsequently after said manufacturing inside said vehicle, and
**in that** it comprises a processing unit (6), converting the communication type and protocols from the original steering wheel commands into commands for the electronic apparatus to be controlled and the sequences of signals obtained by activation of said controls (2) installed on the steering wheel (3), into corresponding further control signals for controlling said one or more further added electronic apparatuses, and said pre installed electronic apparatus

2. The device (1) according to Claim 1, **characterized in that** said processing unit (6) comprises a microprocessor (9).

3. The device (1) according to any one of the preceding claims, **characterized in that** said processing unit (6) comprises an input signal interface (10), designed for a pre-processing of the signal coming from said controls (2), and an output interface (11) for the signal to be sent to said one or more further added electronic apparatuses.

4. The device (1) according to any one of the preceding claims, **characterized in that** said control signals for controlling said one or more further added electronic apparatuses are obtained by means of one or more sequences of operation of said controls (2).

5. The device (1) according to any one of the preceding claims, **characterized in that** it comprises an input connector (8), which can be electrically connected to said controls (2).

6. The device (1) according to any one of the preceding claims, **characterized in that** it comprises an output connector (12), which can be connected by means of wires to said one or more further added electronic apparatuses installed inside said vehicle.

7. The device (1) according to claim 1 , **characterized in that** it comprises wireless transceiver means for connection to said one or more further added electronic apparatuses installed inside said vehicle.

8. The device (1) according to Claim 7, **characterized in that** said wireless transceiver means are, for example, of the infrared or Bluetooth type.

9. The device (1) according to any one of the preceding claims, **characterized in that** it comprises a supply-stabilization unit (13).

10. The device (1) according to any one of the preceding claims, **characterized in that** said one or more further added electronic apparatuses comprise handsfree kits and/or satellite navigators and/or GPS and/or DVD readers and/or Mp3 transceivers and/or readers.

## Patentansprüche

1. Schnittstellen-Steuervorrichtung (1) zur Steuerung der elektronischen Geräte eines Fahrzeuges, das genannte Fahrzeug schließt mehrere Bedienelemente (2) ein, die am Steuer (3) installiert sind, und geplant wurden, um auf ihren Druck ein elektrisches Signal für die Steuerung mehrerer elektronischer Geräte zu erzeugen, die während der Herstellung des Fahrzeuges im genannten Fahrzeug installiert wurden, die genannte Schnittstellen-Steuervorrichtung ist **dadurch gekennzeichnet, dass**
Sie elektrisch mit den genannten Bedienelementen (2) verbunden werden kann, und zwar sowohl mit den genannten mehreren vorher installierten elektronischen Geräten als auch mit einem oder mehreren hinzugefügten Geräten, die nach der genannten Herstellung im Innenraum des genannten Fahrzeuges installiert wurden, und
Sie eine Bearbeitungseinheit (6) einschließt, die den Typ der Kommunikationsprotokolle von den originalen Bedienelementen am Steuer in Befehle für das zu steuernde elektronische Gerät, sowie die Sequenzen der durch die Aktivierung der genannten, am Steuer (3) installierten Bedienelemente (2) erhaltenen Signale in entsprechende weitere Steuersignale zur Steuerung eines oder mehrerer der genannten hinzugefügten Geräte und des genannten vorher installierten elektronischen Gerätes konvertiert.

2. Vorrichtung (1) gemäß Patentanspruch 1, die **dadurch gekennzeichnet ist, dass** die genannte Bearbeitungseinheit (6) einen Mikroprozessor (9) enthält.

3. Vorrichtung (1) gemäß einem beliebigen der vorhergehenden Patentansprüche, die **dadurch gekennzeichnet ist, dass** die genannte Bearbeitungseinheit (6) eine Schnittstelle für das Eingangssignal (10), die für eine Vorbearbeitung des von den genannten Bedienelementen (2) stammenden Signals geplant wurde, sowie eine Schnittstelle für das Ausgangssignal (11), das an ein oder mehrere hinzugefügte elektronische Geräte gesendet werden soll, einschließt.

4. Vorrichtung (1) gemäß einem beliebigen der vorhergehenden Patentansprüche, die **dadurch gekennzeichnet ist, dass** die genannten Steuersignale zur Steuerung des/der genannten weiteren hinzugefügten elektronischen Geräte durch eine oder mehrere Betriebssequenzen der genannten Bedienelemente (2) erhalten werden.

5. Vorrichtung (1) gemäß einem beliebigen der vorhergehenden Patentansprüche, die **dadurch gekennzeichnet ist, dass** sie einen Eingangsverbinder (8) einschließt, der elektrisch mit den genannten Bedienelementen (2) verbunden werden kann.

6. Vorrichtung (1) gemäß einem beliebigen der vorhergehenden Patentansprüche, die **dadurch gekennzeichnet ist, dass** sie einen Ausgangsverbinder (12) einschließt, der durch Drähte mit dem/den genannten weiteren hinzugefügten elektronischen Geräten, die im Innenraum des genannten Fahrzeuges installiert sind, verbunden werden kann.

7. Vorrichtung (1) gemäß Patentanspruch 1, die **dadurch gekennzeichnet ist, dass** sie drahtlose Sende- und Empfangsgeräte für die Verbindung mit dem/den genannten weiteren hinzugefügten elektronischen Geräten einschließt, die im Innenraum des genannten Fahrzeuges installiert sind.

8. Vorrichtung (1) gemäß Patentanspruch 7, die **dadurch gekennzeichnet ist, dass** die genannten drahtlosen Sende- und Empfangsgeräte zum Beispiel Infrarot- oder Bluetooth-Geräte sind.

9. Vorrichtung (1) gemäß einem beliebigen der vorhergehenden Patentansprüche, die **dadurch gekennzeichnet ist, dass** sie eine Speise-Stabilisierungseinheit (13) einschließt.

10. Vorrichtung (1) gemäß einem beliebigen der vorhergehenden Patentansprüche, die **dadurch gekennzeichnet ist, dass** das/die genannten weiteren hinzugefügten elektronischen Geräte Bausätze für Freisprechanlagen und/oder Satelliten-Navigationsgeräte und/oder GPS-Geräte und/oder DVD-Lesegeräte und/oder Sende- und Empfangsgeräte und/oder MP3-Lesegeräte einschließen.

## Revendications

1. Dispositif d'interface de commande (1) pour commander les équipements électroniques d'un véhicule, ledit véhicule comprenant une pluralité de commandes (2) installées au volant (3), spécifiquement conçues pour engendrer, sur pression, un signal électrique capable de commander une pluralité d'équipements électroniques installés lors de la fabrication du véhicule dans ledit véhicule, ledit dispositif d'interface de commande étant **caractérisé en ce que** :
il peut être relié en mode électrique auxdites commandes (2), ainsi qu'à ladite pluralité d'équipements électroniques pré installés et ainsi qu'à un ou plusieurs équipements ajoutés installés par la suite après ladite fabrication à l'intérieur dudit véhicule, et
**en ce qu'**il comprend une unité de traitement (6), capable de convertir le type et les protocoles de communications des commandes au volant d'origine en commandes pour l'équipement électronique à commander, et les séquences de signaux obtenues par l'activation desdites commandes (2) installées sur le volant (3) en d'autres signaux de commande correspondants pour commander lesdits un ou plusieurs équipements électroniques ajoutés et ledit équipement électronique pré installé.

2. Dispositif (1) selon la revendication 1, **caractérisé en ce que** ladite unité de traitement (6) comprend un microprocesseur (9).

3. Dispositif (1) selon une quelconque des revendications précédentes, **caractérisé en ce que** ladite unité de traitement (6) comprend une interface du signal d'entrée (10) conçue pour le prétraitement du signal provenant desdites commandes (2), et une interface de sortie (11) pour le signal à envoyer auxdits un ou plusieurs autres équipements électroniques ajoutés.

4. Dispositif (1) selon une quelconque des revendications précédentes, **caractérisé en ce que** lesdits signaux de commande pour commander lesdits un ou plusieurs autres équipements électroniques ajoutés sont obtenus à travers une ou plusieurs séquences opérationnelles desdites commandes (2).

5. Dispositif (1) selon une quelconque des revendications précédentes, **caractérisé en ce qu'**il comprend un connecteur d'entrée (8), pouvant être relié en mode électrique auxdites commandes (2).

6. Dispositif (1) selon une quelconque des revendications précédentes, **caractérisé en ce qu'**il comprend un connecteur de sortie (12) pouvant être relié au moyen de fils auxdits un ou plusieurs autres équipements électroniques ajoutés installés à l'intérieur dudit véhicule.

7. Dispositif (1) selon la revendication 1, **caractérisé en ce qu'**il comprend des moyens récepteurs transmetteurs sans fils pour la liaison électrique auxdits un ou plusieurs autres équipements électroniques ajoutés installés à l'intérieur dudit véhicule.

8. Dispositif (1) selon la revendication 7, **caractérisé en ce que** lesdits moyens récepteurs transmetteurs sans fils sont, par exemple, du type à infrarouges ou Bluetooth.

9. Dispositif (1) selon une quelconque des revendications précédentes, **caractérisé en ce qu'**il comprend un groupe d'alimentation / stabilisation (13).

10. Dispositif (1) selon une quelconque des revendications précédentes, **caractérisé en ce que** lesdits un ou plusieurs autres équipements électroniques ajoutés comprennent un kit mains libres et/ou un navigateurs via satellite et/ou un GPS et/ou des lecteurs DVD et/ou un récepteurs transmetteurs et/ou des lecteurs MP3.
